# EUROPEAN PATENT SPECIFICATION

(11) **EP 4 289 682 B1**
(45) Date of publication and mention of the grant of the patent: **30.04.2025**
(21) Application number: 22177753.5
(22) Date of filing: 08.06.2022
(51) Int. Cl.: B60R 21/38, F15B 15/19

(54) **A SAFETY DEVICE IN A VEHICLE**
SICHERHEITSVORRICHTUNG IN EINEM FAHRZEUG
DISPOSITIF DE SÉCURITÉ DANS UN VÉHICULE

(43) Date of publication of application: 13.12.2023
(73) Proprietor: Autoliv Development AB, 44783 Vargarda (SE)
(72) Inventor: ANDERSSON, Mikael, 447 83 Vårgårda (SE); RYDSMO, Erik, 447 83 Vårgårda (SE)
(74) Representative: AWA Sweden AB

(56) References cited:
- EP-A2- 1 733 929
- EP-A2- 1 808 606
- DE-A1- 102007 009 096
- DE-A1- 102018 108 994
- FR-A1- 2 721 073
- JP-A- 2008 075 739

## Description

### Technical field

The present invention refers to a safety device in a vehicle.

### Technical background

It is well known in the art to use actuators in safety devices in a motor vehicle which actuators comprise a piston that is moved from a retracted position into an extracted position by gas generated by a gas generator. One example is in the use of a hood lifter to lift the hood or bonnet of a vehicle in order of providing protection for a pedestrian hit by the vehicle. Another example is in a seat belt pretension system in order to provide an early coupling of the body in the event of an accident. The overall principle is the same, namely that the piston is fitted in a housing together with a gas generator. The gas generator comprises a pyrotechnical load. The gas generator is connected to a power connector which in turn is connected to a power system of the vehicle and also to the ECU (Electrical Control unit) of the vehicle. When the ECU determines that the vehicle is subjected to an accident that requires a specific action, the gas generator is deployed which in turn results in a sudden gas generation that acts on the piston and moves the same from the retracted position to the extracted position to thereby e.g. lift a hood or pull the seat belt.

The actuator is often delivered to the customer, i.e. the car manufacturer, with a so called cable harness that is pre-mounted to the power connector. This cable harness comprises a connector in its free end that is configured to be connected, directly or indirectly, to the ECU of the vehicle. When mounted in the engine compartment, the safety system will be subjected to very harsh conditions by being subjected to water, moist and dust, whereby it is essential that the safety system, including its power connection, can withstand this environment. By delivering the safety system with a pre-mounted cable harness, the supplier of the safety system has an improved possibility to ensure the quality of the sealing, and hence ensure the long-term performance of the safety system. However, the cable harness is often the most expensive part of the safety system, whereby there is a need for another alternative that does not involve the pre-mounted cable harness but that still does not jeopardize the sealing and the overall quality.

DE 10 2007 009 096 A1 discloses an energy accumulator comprising a tubular housing.

DE 10 2018 108 994 A1 discloses a safety device in a vehicle, the safety device comprising an actuator comprising a housing, a piston arrangement fitted in the housing and being movable from a retracted position to an extended position, a gas generator and a power connector configured to allow powering of the gas generator; wherein the housing has a first end having a through-going opening and an internal surface encircling the through-going opening and forming a seating; the gas generator is connected to a support member; the power connector is situated on the outside of the housing on the first end of the housing and connected to the gas generator; and wherein the support member is abutting the seating thereby closing the through-going opening in the housing and forming a first sealing arrangement preventing intrusion of moisture and/or dust into the housing.

### Summary

It is an object of the present invention to provide a safety device to be used in a vehicle that is easy to be connected to the power system in a vehicle and that provides a sealing that can withstand the harsh environment prevailing in an engine compartment of a motor vehicle.

Another object of the invention is to provide a safety device that allows a high-qualitative and safe connection to the power system of the vehicle and/or to the ECU by using the existing cable and connector system in the vehicle.

These and other objects that will be apparent from the following summary and description are achieved by a safety device in a vehicle, said safety device being defined by the features of claim 1.

Accordingly, a safety device for a vehicle is provided that comprises an actuator in which the gas generator is arranged in a position inside the housing and wherein the power connector is arranged in a position outside the housing. The two components are connected to each other via a through-going opening in the first end of the housing. The opening is closed and sealed by a support member that serves the dual purpose of acting as a first sealing arrangement and also supporting the gas generator. Accordingly, the support member to which the gas generator is connected may be seen as a plug that closes off the opening and also abuts the seating. This allows a simplified assembly since the number of components may be reduced. Also, a sealing of the through-going opening in the housing is automatically achieved when mounting the gas generator.

The power connector may be connected to a second sealing arrangement, the second sealing arrangement comprising a circumferential wall defining an axially extending recess or a through-going channel, and wherein the power connector is arranged in said recess or through-going channel.

Accordingly, the second sealing arrangement comprises either an axially extending recess or a through-going channel. No matter form, the power connector, which as such is arranged on the outer side of the housing is arranged in said recess or through-going channel. Thereby, the second sealing arrangement serves as an axially extending encapsulation of the power connector.

The second sealing arrangement may in a first embodiment be a portion that is integrally formed with the support member and that projects out from the through-going opening in the first end of the housing, and which portion comprises an axially extending recess which is configured to sealingly encircle an outer envelope wall of the power connector. By being provided as a recess, the bottom end of such recess may be seen as a seating that provides an axial support surface for the power connector when received in the recess. The power connector may be configured to communicate with the gas generator by terminals of either the power connector or the gas generator extending through respective openings in a bottom wall of the recess. Thereby intrusion of moisture and/or dirt into the housing may be prevented or counteracted.

The second sealing arrangement may in an alternative embodiment be formed as a sleeve, such as a resilient sleeve that elastically encircles an outer envelope wall of the power connector, thereby preventing or counteracting intrusion of moisture and/or dirt in the axial direction into the housing.

An inner circumferential wall of the second sealing arrangement may, no matter if the second sealing arrangement comprises a recess or a though-going channel, comprise at least one axially and radially extending guiding member, the guiding member being configured to engage a complementary guiding member of the power connector. The guiding member ensures a correct alignment and mounting of the terminals of the power connector in view of complementary terminals of the gas generator that is arranged inside the housing. This allows a simplified and intuitive assembly.

The support member comprises a first portion
being arranged inside the housing and a second portion being arranged outside the housing. The first portion may have a first outer diameter and the second portion may have a second outer diameter, the first outer diameter being larger than the second outer diameter, and wherein the second portion forms the second sealing arrangement.

The support member may thereby be seen as a plug where the first portion is configured to be arranged in sealing contact with the seating being formed inside the housing and thereby also forms the first sealing arrangement. The second portion is configured to extend out from the housing via the through-going opening in the first end of the housing The second portion is configured to contain the second sealing arrangement in the form of a recess.

An outer envelope surface of the first portion of the support member comprises a circumferential recess that receives a sealing member that acts between an inner envelope surface of the housing and the first portion of the support member. The sealing member may in its easiest form be an O-ring. The purpose is to give a supplementary protection against intrusion of moisture and/or dirt into the housing along the interface between the inner envelope wall of the housing and the outer envelope surface of the support member. By the seating in the housing having a substantially radial direction and by the subsequent O-ring, a labyrinth is formed that makes it very difficult for any intrusion of foreign matter past the support member and into the housing.

The gas generator may be connected to the support member by an overmolded cover that forms an at least partial encapsulation of the gas generator and the support member. By using an overmold, the support member and the gas generator will constitute one single unit. Not only is it a single unit in terms of stock keeping, but is also facilitates assembly of the actuator. Also, the overmold gives an extra protection of the gas generator as such.

The cover may comprise a material being more resilient than a material of the support member. By using a resilient material, the material will as such contribute to the provision of a sealing effect between the seating in the housing and the support member that is configured to abut the seating. The skilled person realizes that the overmold may be formed by different portions having different materials or different elastic properties.

In the embodiment where the second sealing arrangement comprises a through-going channel, the second sealing arrangement may be formed as a resilient sleeve having one end at least partially overlapping an outer envelope wall portion of the housing. Thus, the second sealing arrangement is in this embodiment a discrete member that is configured to be mounted to the housing from the exterior side thereof. The sleeve may be configured to be slid onto the outer envelope wall portion of an axially extending tube-shaped portion of the housing that encircles the through-going opening in the first end of the housing. The tube-shaped portion may be integrally formed with the housing or be attached thereto by e.g. welding or soldering. By the sleeve being slid onto the outer envelope wall portion, a labyrinth effect is achieved that forces any moisture or dirt to change direction more or less 180 degrees at least two times to enter into the housing via the through-going opening in the first end of the housing. Once passing that opening, it must still pass the first sealing arrangement acting against the seating on the inner side of the housing.

The resilient sleeve of the second sealing arrangement may comprise a radially and inwardly extending waist portion. The waist portion strengthens the sealing labyrinth effect. Further, the waist portion forms a physical stop during mounting of not only the resilient sleeve to the tube-shaped portion of the housing but also when mounting the power connector which is configured to be arranged coaxially inside the second sealing member.

The safety device may in one embodiment be a hood lifter in a vehicle.

The safety device may in one embodiment be a seat belt pretensioner in a vehicle.

The safety device may in one embodiment be a seat structure reinforcer that may reinforce the seat structure or the mounting of the seat in the seat rails during a crash situation when the seat experiences high load conditions.

### Brief description of the drawings

The invention will be described in detail with reference to the schematic drawings.
Fig. 1 discloses a schematic exploded view of a first embodiment of a safety device according to the invention.
Fig. 2 discloses a schematic cross section of the area in and around the gas generator in a safety device according to the first embodiment.
Figs. 3a and 3b disclose one embodiment of the support member according to the first embodiment of the safety device with an overmolded gas generator.
Fig. 4 discloses a schematic exploded view of a second embodiment of a safety device according to the invention.
Fig. 5 discloses a schematic cross section of the area in and around the gas generator in a safety device according to the second embodiment.

### Detailed description

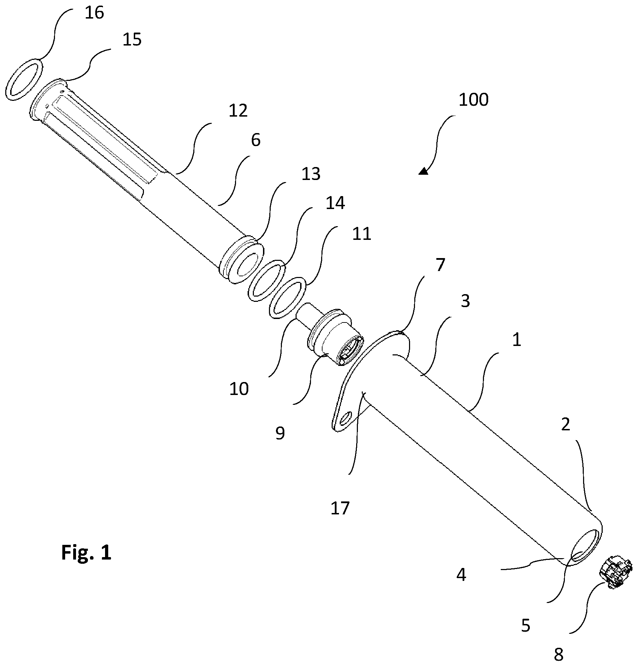

Now turning to Fig. 1 a schematic exploded view of a first embodiment of a safety device according to the invention is disclosed. The safety device comprises an actuator 100 that comprises a tubular housing 1 having a first end 2 and a second end 3. The first end 2 comprises an end wall 4 having a through-going opening 5. The second end 3 of the housing 1 is an open end through which the interior components of the actuator 100 are inserted during assembly and through which the piston 6 is configured to project during operation of the actuator 100 when set from an ordinary retracted position to an extended position. The housing 1 may be formed by deep drawing a metal material. By deep drawing, the end wall 4 of the first end 2 of the housing 1 will be automatically formed. Further, a radially extending flange portion 7 may be formed at the second end 3 of the housing 1. The flange portion 7 may be used to mount the actuator 100 to a vehicle.

The actuator 100 further comprises a power connector 8. The power connector 8 is configured to be arranged on the exterior side of the housing 1 adjacent the first end 2 of the housing. The power connector 8 is preferably a standard component configured to fit a standard electrical connector of the vehicle. The power connector 8 will be exemplified below as a female type connector, but it may, with remained function be a male type connector. In the context of the invention, the power connector 8 is described as a connector having terminals configured to receive terminals of the gas generator. Depending on the connector system used in the vehicle to which the actuator 100 should be connected, the power connector 8 can instead be an adaptor configured to receive another power connector (not disclosed) which in turn comprises terminals to connect with the terminals of the gas generator.

The actuator 100 further comprises a support member 9 with an overmolded gas generator 10 whereby the support member 9 and the gas generator 10 form one unitary body. A sealing member 11 in the form of an O-ring is configured to be supported by the support member 9.

The actuator 100 further comprises a piston arrangement 12. A first end 13 of the piston arrangement 12 configured to face the first end 2 of the housing 1 supports a sealing member 14 in the form of an O-ring. A second end 15 of the piston arrangement 12 configured to face the second end 3 of the housing 1 supports a sealing member 16 in the form of an O-ring.

The support member 9, sealing members 13, 16 and the piston arrangement 12 are all configured to be inserted during assembly of the actuator via the second end 3 of the housing 1. To keep all parts inside the housing 1 after assembly, the second end 3 is after assembly provided with a radially extending waist portion 17 having a locally reduced diameter.

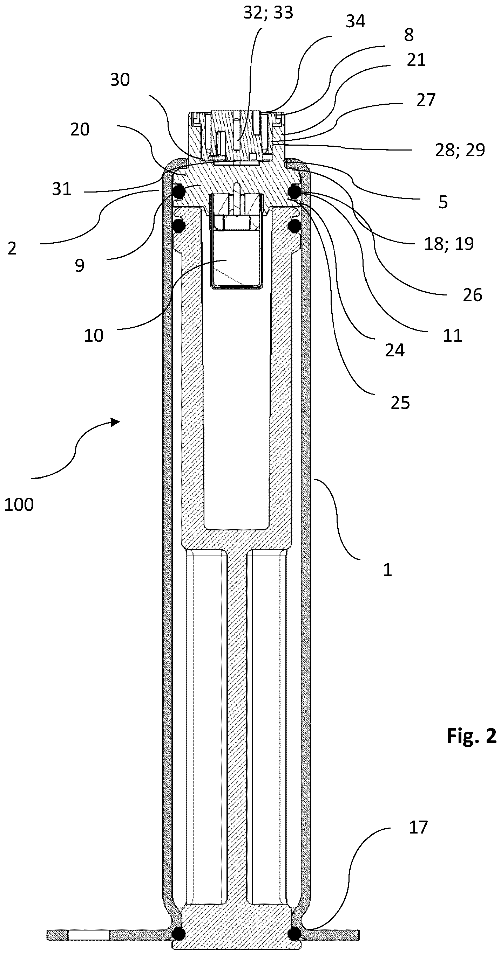

Now turning to Fig. 2, a schematic cross section of an assembled actuator 100 according to the first embodiment is disclosed. As is seen from this cross section, the first end 2 of the housing 1 has the through-going opening 5. An internal surface 18 of the housing 1 encircling the through-going opening 5 forms a seating 19. The seating 19 has a radial extension.

The through-going opening 5 is closed by the support member 9 that abuts the seating 19 and thereby closes the through-going opening 5.

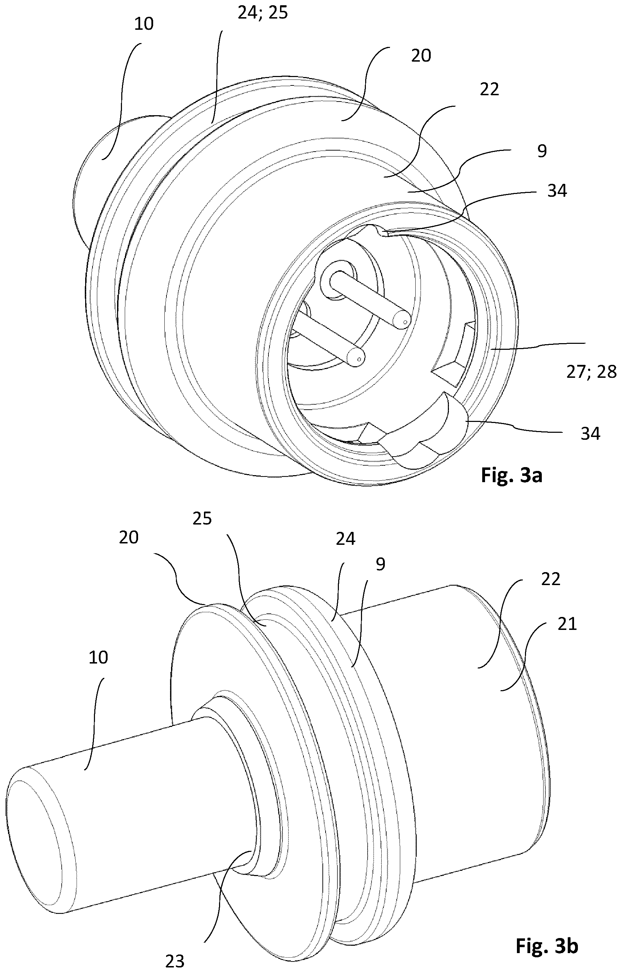

The support member 9, best seen in Figs. 3a and 3b, comprises a first portion 20 to be arranged inside the housing 1 and a second portion 21 to be arranged outside the housing 1. The first portion 20 has a first outer diameter and the second portion 21 has a second outer diameter, the first outer diameter being larger than the second outer diameter. The first portion 20 supports the gas generator 10. The gas generator 10 is configured to project towards the second end 3 of the housing 1 in a condition when the support member 9 is mounted in the housing 1.

The gas generator 10 is connected to the support member 9 by an overmolded cover 22. The cover 22 forms an at least partial encapsulation of the gas generator 10 and the support member 9. By using an overmold, the support member 9 and the gas generator 10 will constitute one single unit. The overmolded cover 22 may comprise a polymeric material being more resilient than a core material of the support member 9. The skilled person realizes that the overmold may be formed by different portions having different materials or different elastic properties. Thus, overmold material in and around the second portion 21 may be more resilient than overmold material in and around the first portion 20. As is best seen in Fig. 3b, the overmold material may form a sealed contact surface 23 with the gas generator 10.

An outer envelope surface 24 of the first portion 20 of the support member 9 comprises a circumferential recess 25 that receives the sealing member 11, see Fig. 2. The sealing member 11 is disclosed as an O-ring but it is to be understood that other types of sealing members may be used. When mounted in the housing 1, see Fig. 2, the sealing member 11 is configured to act between an inner envelope surface 26 of the housing 1 and the first portion 20 of the support member 9.

The second portion 21 of the support member 9 that projects out from the through-going opening 5 in the first end 2 of the housing 1 comprises an axially extending recess 27 that receives the power connector 8. An inner envelope wall 28 of the recess 27 sealingly encircles an outer envelope wall 29 of the power connector 8.

A bottom wall 30 of the recess 27 facing the housing 1 comprises through-going openings 31. The openings allow terminals 32 of the gas generator 10 to project into the recess 27 to thereby connect to corresponding terminals 33 of the power connector 8 or of a connector (not shown) to be connected thereto. The bottom wall 30 of the recess 27 may be seen as a seating that provides an axial support surface for the power connector 8 when received in the recess 27.

As is best seen in Figs. 2 and 3a, an inner circumferential wall of the recess 27 comprises two axially and radially extending guiding members 34. The guiding members 34 are configured to engage complementary guiding members of the power connector 8. The guiding members 34 ensure a correct alignment and mounting of the terminals 33 of the power connector 8 in view of complementary terminals 32 of the gas generator 10 that is arranged inside the housing 1. The skilled person realizes that the same effect may be achieved by one guiding member only.

By this first embodiment of the invention disclosed in Figs. 1, 2, 3a and 3b, the following sealing effects are achieved that contribute to the prevention of intrusion of moisture and dirt from the outside into the interior of the housing 1 via the through-going opening 5 in the first end 2 of the housing 1.

A first sealing arrangement is provided for by the support member 9 which acts as a plug that extends through the through-going opening 5 in the first end 2 of the housing 1 and closes the same, while also at the same time abutting the seating 19 that is formed by the internal surface 18 that encircles the through-going opening 5. In the event the overmold of the support member 9 is made of resilient material, an even better sealing effect in this area may be provided for.

A second sealing arrangement is provided for by the axially extending recess 27 that is formed in the second portion 21 of the support member 9 which projects out from the through-going opening 5. The inner envelope wall 28 of the recess 27 sealingly encircles the outer envelope wall 29 of the power connector 8. By being provided as a recess 27, the bottom end 30 of the recess may be seen as a seating that provides an axial support surface for the power connector 8 when received in the recess 27. The second sealing arrangement protects the contact between the terminals 33 of the power connector 8 and the terminals 32 of the gas generator 10. Thereby intrusion of moisture and/or dirt into the housing may be further prevented or counteracted.

In the event moisture or dirt should still be allowed to enter the housing 1 via the through-going opening 5 in the first end 2 of the housing 1, the sealing member 11 supported by the first portion 20 of the support member 9 that is configured to act between the inner envelope surface 26 of the housing 1 and the first portion 20 of the support member 9 may be seen as a third sealing arrangement.

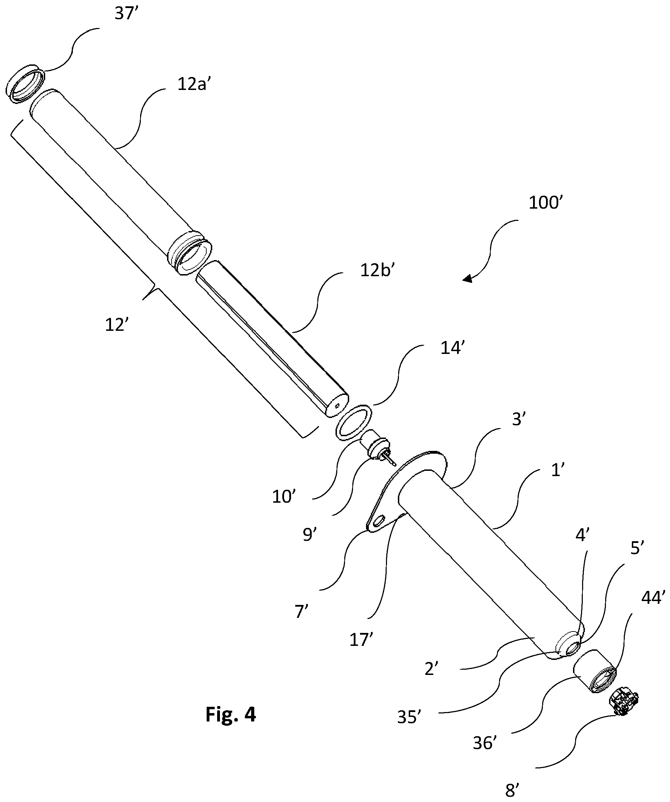

Now turning to Fig. 4 a schematic exploded view of a second embodiment of a safety device according to the invention is disclosed. The safety device comprises an actuator 100' that comprises a tubular housing 1' having a first end 2' and a second end 3'. The first end 2' of the housing 1' comprises an end wall 4' having a through-going opening 5'. The through-going opening 5' is encircled by an axially extending tube-shaped portion 35'. The tube-shaped portion 35' may be integrally formed with the housing 1' or be attached thereto by e.g. welding or soldering.

The second end 3' of the housing 1' is an open end through which the interior components of the actuator 100' are inserted during assembly and through which the piston 12' is configured to project during operation of the actuator 100' when set from an ordinary retracted position to an extended position.

The housing 1' may be formed by deep drawing a metal material. By deep drawing the 4' end wall of the first end 2' of the housing 1' will be automatically formed and also, a radially extending flange portion 7' may be formed at the second end 3' of the housing 1'. The flange portion 7' may be used to mount the actuator 100' to a vehicle.

The actuator 100' further comprises a power connector 8'. The power connector 8' is configured to be arranged on the exterior side of the housing 1' adjacent the first end 2'. The power connector 8' is preferably a standard component configured to fit a standard connector of the vehicle. The power connector will be exemplified below as a female type connector, but it may, with remained function be a male type connector. In the context of the invention, the power connector 8' is described as a connector having terminals configured to receive terminals of the gas generator. Depending on the connector system used in the vehicle to which the actuator 100' should be connected, the power connector 8' can instead be an adaptor configured to receive another power connector (not disclosed) which in turn supports terminals.

The power connector 8' is configured to connect to the housing 1' by a resilient sleeve 36' having a through-going channel 44'.

The actuator 100' further comprises a support member 9' supporting a gas generator 10'.

The actuator 100' further comprises a piston arrangement 12'. The piston arrangement 12' comprises a piston made of an outer tube 12a' which contains a core 12b'. The skilled person realizes that the piston arrangement 12' may be provided in different forms within the scope of the invention.

A first end of the piston arrangement 12' configured to face the first end 2' of the housing 1' supports a sealing member 14' in the form of an O-ring.

The opening in the second end of the housing is configured to be closed by end cover 37'.

The support member 9' with the gas generator 10', the piston arrangement 12' and the end cover 37' are all configured to be inserted during assembly of the actuator 100' via the second end 3' of the housing 1'. To keep all parts inside the housing 1' after assembly, the second end 3' is then provided with a radially extending waist portion 17' having a locally reduced diameter.

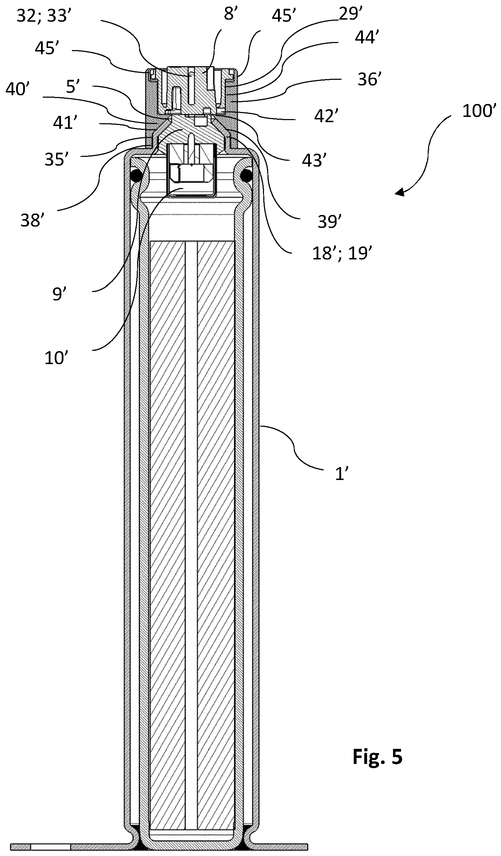

Now turning to Fig. 5, a schematic cross section of an assembled actuator 100' according to the second embodiment is disclosed.

The through-going opening 5' in the first end 2' of the housing 1' is encircled by the axially extending tube-shaped portion 35'. The tube-shaped portion 35' is disclosed as being integrally formed with the housing 1'. In an alternative embodiment, the tube-shaped portion 35' may be attached thereto by e.g. welding or soldering. The tube-shaped portion 35' has a first straight portion 38' adjacent the housing 1' and a conical portion 39' tapering towards the first end 2' of the housing 1'. The internal surface 18' of the tube-shaped portion 35' encircling the through-going opening 5' forms a seating 19'. The seating 19' has a radial and axial extension.

The through-going opening 5' is closed by the support member 9' that abuts the seating 19' and thereby closes the through-going opening 5'. The support member 9' may be integrally formed with the gas generator 10' or be mechanically connected to the gas generator 10'. Terminals 32' of the gas generator 10' extend through the support member 9' and projects out from the housing 1' via its tube-shaped portion 35'. The thus projecting terminals 32' of the gas generator 10' connect to corresponding terminals 33' of the power connector 8' that is arranged on the exterior side of the housing 1'.

The resilient sleeve 36' having the through-going channel 44' is arranged to bridge the tube-shaped portion 35' of the housing 1' and an outer envelope surface 29' of the power connector 8'. The resilient sleeve 36' is accordingly a discrete member that is configured to be mounted to the housing 1' from the exterior side thereof. The resilient sleeve 36' has one end that is slid onto an outer envelope wall portion 39'of the axially extending tube-shaped portion 35' of the housing 1' and one end that is slid onto the outer envelope surface 29' of the power connector 8'.

The resilient sleeve 36' is disclosed as comprising a radially and inwardly extending waist portion 40'. The waist portion 40' has a first wall portion 41' adapted to abut the outer wall of the tube-shaped portion 35' and a second wall portion 42' adapted to abut the power connector 8'. The waist portion 40' forms a physical stop during mounting of not only the resilient sleeve 36' to the tube-shaped portion 35' of the housing 1' but also when mounting the power connector 8' which is configured to be arranged coaxially inside the resilient sleeve 36'.

The waist portion 40' has a radial extension that extends into and forms a contact surface 43' with a free end of the support member 9' facing the power connector 8' and also with a free end of the power connector 8' facing the housing 1. The waist portion 40' is disclosed as having a wedge shaped cross section. By the wedge shaped cross section, an inherent flexibility is provided that allows the waist portion 40' to adapt to the available interspace and deflect if necessary, and hence further improve the sealing effect.

An inner circumferential wall of the resilient sleeve 36' comprises two axially and radially extending guiding members 45'. The guiding members 45' are configured to engage complementary guiding members of the power connector. The guiding member 45' ensure a correct alignment and mounting of the terminals 33' of the power connector 8' in view of complementary terminals 32' of the gas generator 10'. The skilled person realizes that the same effect may be achieved by one guiding member only. This allows a simplified and intuitive assembly.

By this second embodiment of the invention disclosed in Figs. 4 and 5, the following sealing effects are achieved that contribute to the prevention of intrusion of moisture and dirt from the outside into the interior of the housing 1' via the through-going opening 5' in the first end 2' of the housing 1'.

A first sealing arrangement is provided for by the support member 9' which acts as a plug that extends through the through-going opening 5' in the first end 2' of the housing 1' and closes the same, while also at the same time abutting the seating 19' that is formed by the internal surface 18' in the housing 1' and its tube-shaped portion 35'.

A second sealing arrangement is provided for by the axially extending resilient sleeve 36' that bridges the housing 1' and the power connector 8' and that sealingly encircles the outer envelope surface of the tube-shaped portion 35' of the housing 1' and the outer envelope surface of the power connector 8'. By the resilient sleeve 36' being slid onto the outer envelope wall portions, a labyrinth effect is achieved that forces any moisture or dirt to change directions several times before being allowed to enter the housing 1' via a mouth in the tube-shaped portion 35'. Once passing that mouth it must still pass the first sealing arrangement acting against the seating 19' in the housing.

The radially extending waist portion 40' further strengthens the sealing labyrinth effect. Further, by the waist portion 40' having a radial extension that extends into a contact with a free end of the support member 9' facing the power connector 8' and also with a free end of the power connector 8' facing the housing 1', a further sealing effect is provided for that protects the interface between the terminals 32', 33' of the gas generator 10' and the power connector 8'. By providing the contact surface with a wedge-shaped cross section, an inherent flexibility is provided for that allows the waist portion 40' to adapt to the available interspace, and deflect if possible, and hence further improve the sealing effect.

The disclosed safety devices, no matter embodiment, may be implemented in a vehicle, either as a hood lifter or as a seat belt pretensioner. The safety device may also be used as a seat structure reinforcer.

The power connector of the safety device may be connected directly, or indirectly to the ECU of the vehicle by using an existing cable and connector system in the vehicle.

## Claims

1. A safety device in a vehicle, the safety device comprising an actuator (100; 100') comprising a housing (1; 1'), a piston arrangement (12; 12') fitted in the housing and being movable from a retracted position to an extended position, a gas generator (10; 10') and a power connector (8; 8') configured to allow powering of the gas generator; wherein
the housing (1; 1') has a first end (2; 2') having a through-going opening (5; 5') and an internal surface encircling the through-going opening and forming a seating (19; 19');
the gas generator (10; 10') is connected to a support member (9; 9');
the power connector (8; 8') is situated on the outside of the housing (1; 1') on the first end (2; 2') of the housing (1; 1') and connected to the gas generator (10; 10') and the support member (9; 9'); wherein:
the support member (9; 9') is abutting the seating (19; 19') thereby closing the through-going opening (5; 5') in the housing (1; 1') and forming a first sealing arrangement preventing intrusion of moisture and/or dust into the housing (1; 1'); and
wherein the power connector (8; 8') is connected to a second sealing arrangement;
the second sealing arrangement being formed in a second portion (21) of the support member (9) which projects out from the through-going opening (5), said second portion (21) comprising an axially extending recess (27) having an inner envelope wall (28) that sealingly encircles an outer envelope wall of the power connector (8), wherein the support member (9) comprises a first portion (20) being arranged inside the housing (1) and a second portion (21) being arranged outside the housing (1), the first portion (20) having a first outer diameter and the second portion (21) having a second outer diameter, the first outer diameter being larger than the second outer diameter, and wherein the second portion (21) forms the second sealing arrangement, wherein an outer envelope surface (24) said first portion (20) comprises a circumferential recess (25) that receives a sealing member (11) that acts between an inner envelope surface (26) of the housing (19) and the first portion (20) of the support member (9), thereby forming a third sealing arrangement; or
wherein the second sealing arrangement comprising a resilient sleeve (36') having a through-going channel (44') arranged to bridge an axially extending tube-shaped portion (35') of the housing (1') that encircles the through-going opening (5') located at the first end (2') of the housing (1') and an outer envelope surface (29') of the power connector (8').

2. The safety device according to claim 1, wherein an inner circumferential wall of the recess (27) comprises at least one axially and radially extending guiding member (34), the guiding member being configured to engage a complementary guiding member of the power connector (8).

3. The safety device according to claim 1, wherein the gas generator (10) is connected to the support member (9) by an overmolded cover (22) forming an at least partial encapsulation of the gas generator (10) and the support member (9).

4. The safety device according to claim 3, wherein the cover (22) comprises a material being more resilient than a material of the support member (9).

5. The safety device according to claim 1, wherein an inner circumferential wall of the resilient sleeve (36') comprises one or two axially and radially extending guiding members (45') configured to engage complementary guiding members of the power connector (8').

6. The safety device according to any of claims 1 or 5, wherein the resilient sleeve (36') has one end at least partially overlapping an outer envelope wall portion of the housing (1).

7. The safety device according to any of claims 1, 5 or 6, wherein the resilient sleeve (36') comprises a radially and inwardly extending waist portion (40').

8. The safety device according to any of claims 1-7, wherein the safety device is a hood lifter in a vehicle.

9. The safety device according to any of claims 1-7, wherein the safety device is a seat belt pretensioner in a vehicle.

10. The safety device according to any of the claims 1-7, wherein the safety device is a seat structure reinforcer.

## Patentansprüche

1. Sicherheitsvorrichtung in einem Fahrzeug, die Sicherheitsvorrichtung umfassend einen Aktuator (100; 100'), umfassend ein Gehäuse (1; 1'), eine Kolbenanordnung (12; 12'), die in das Gehäuse eingepasst ist und von einer eingefahrenen Position in eine ausgefahrene Position bewegbar ist, einen Gasgenerator (10; 10') und einen Stromanschluss (8; 8'), der konfiguriert ist, um eine Stromversorgung des Gasgenerators zu ermöglichen; wobei
das Gehäuse (1; 1') ein erstes Ende (2; 2') aufweist, das eine Durchgangsöffnung (5; 5') und eine Innenoberfläche aufweist, die die Durchgangsöffnung umgibt und eine Sitzfläche (19; 19') ausbildet;
der Gasgenerator (10; 10') mit einem Stützelement (9; 9') verbunden ist;
der Stromanschluss (8; 8') an der Außenseite des Gehäuses (1; 1') an dem ersten Ende (2; 2') des Gehäuses (1; 1') platziert und mit dem Gasgenerator (10; 10') und dem Stützelement (9; 9') verbunden ist; wobei:
das Stützelement (9; 9') an der Sitzfläche (19; 19') anliegt und dadurch die Durchgangsöffnung (5; 5') in dem Gehäuse (1; 1') verschließt und eine erste Dichtungsanordnung ausbildet, die ein Eindringen von Feuchtigkeit und/oder Staub in das Gehäuse (1; 1') verhindert; und
wobei der Stromanschluss (8; 8') mit einer zweiten Dichtungsanordnung verbunden ist;
wobei die zweite Dichtungsanordnung in einem zweiten Abschnitt (21) des Stützelements (9) ausgebildet ist, der aus der Durchgangsöffnung (5) hervorsteht, der zweite Abschnitt (21) umfassend eine sich axial erstreckende Aussparung (27), die eine inneren Hüllwand (28) aufweist, die eine äußere Hüllwand des Stromanschlusses (8) dichtend umgibt, wobei das Stützelement (9) einen ersten Abschnitt (20), der innerhalb des Gehäuses (1) angeordnet ist, und einen zweiten Abschnitt (21) umfasst, der außerhalb des Gehäuses (1) angeordnet ist, wobei der erste Abschnitt (20) einen ersten Außendurchmesser und der zweite Abschnitt (21) einen zweiten Außendurchmesser aufweist, wobei der erste Außendurchmesser größer als der zweite Außendurchmesser ist, und wobei der zweite Abschnitt (21) die zweite Dichtungsanordnung ausbildet, wobei eine äußere Hülloberfläche (24) des ersten Abschnitts (20) eine umlaufende Aussparung (25) umfasst, die ein Dichtungselement (11) aufnimmt, das zwischen einer inneren Hülloberfläche (26) des Gehäuses (19) und dem ersten Abschnitt (20) des Stützelements (9) wirkt, wodurch eine dritte Dichtungsanordnung ausgebildet wird; oder
wobei die zweite Dichtungsanordnung eine elastische Hülse (36') umfasst, die einen Durchgangskanal (44') aufweist, der angeordnet ist, um einen sich axial erstreckenden röhrenförmigen Abschnitt (35') des Gehäuses (1') zu überbrücken, der die Durchgangsöffnung (5'), die sich an dem ersten Ende (2') des Gehäuses (1') befindet, und eine äußere Hülloberfläche (29') des Stromanschlusses (8') umgibt.

2. Sicherheitsvorrichtung nach Anspruch 1, wobei eine innere Umfangswand der Aussparung (27) mindestens ein sich axial und radial erstreckendes Führungselement (34) umfasst, wobei das Führungselement konfiguriert ist, um ein komplementäres Führungselement des Stromanschlusses (8) in Eingriff zu nehmen.

3. Sicherheitsvorrichtung nach Anspruch 1, wobei der Gasgenerator (10) mit dem Stützelement (9) durch eine umspritzte Abdeckung (22) verbunden ist, die eine mindestens teilweise Einkapselung des Gasgenerators (10) und des Stützelements (9) ausbildet.

4. Sicherheitsvorrichtung nach Anspruch 3, wobei die Abdeckung (22) ein Material umfasst, das elastischer als ein Material des Stützelements (9) ist.

5. Sicherheitsvorrichtung nach Anspruch 1, wobei eine innere Umfangswand der elastischen Hülse (36') ein oder zwei sich axial und radial erstreckende Führungselemente (45') umfasst, die konfiguriert sind, um komplementäre Führungselemente des Stromanschlusses (8') in Eingriff zu nehmen.

6. Sicherheitsvorrichtung nach einem der Ansprüche 1 oder 5, wobei die elastische Hülse (36') ein Ende aufweist, das einen äußeren Hüllwandabschnitt des Gehäuses (1) mindestens teilweise überlappt.

7. Sicherheitsvorrichtung nach einem der Ansprüche 1, 5 oder 6, wobei die elastische Hülse (36') einen sich radial und nach innen erstreckenden Taillenabschnitt (40') aufweist.

8. Sicherheitsvorrichtung nach einem der Ansprüche 1 bis 7, wobei die Sicherheitsvorrichtung ein Motorhaubenheber in einem Fahrzeug ist.

9. Sicherheitsvorrichtung nach einem der Ansprüche 1 bis 7, wobei die Sicherheitsvorrichtung ein Sicherheitsgurtstraffer in einem Fahrzeug ist.

10. Sicherheitsvorrichtung nach einem der Ansprüche 1 bis 7, wobei die Sicherheitsvorrichtung ein Sitzstrukturverstärker ist.

## Revendications

1. Dispositif de sécurité dans un véhicule, le dispositif de sécurité comprenant un actionneur (100 ; 100') comprenant un logement (1 ; 1'), un agencement de piston (12 ; 12') monté dans le logement et étant mobile d'une position rétractée à une position déployée, un générateur de gaz (10 ; 10') et un connecteur d'alimentation (8 ; 8') conçu pour permettre l'alimentation du générateur de gaz ; dans lequel
le logement (1 ; 1') a une première extrémité (2 ; 2') ayant une ouverture traversante (5 ; 5') et une surface interne encerclant l'ouverture traversante et formant un siège (19 ; 19') ;
le générateur de gaz (10 ; 10') est relié à un élément de support (9 ; 9') ;
le connecteur d'alimentation (8 ; 8') est situé à l'extérieur du logement (1 ; 1') sur la première extrémité (2 ; 2') du logement (1 ; 1') et relié au générateur de gaz (10 ; 10') et l'élément de support (9 ; 9') ; dans lequel :
l'élément de support (9 ; 9') vient en butée contre le siège (19 ; 19') fermant ainsi l'ouverture traversante (5 ; 5') dans le logement (1 ; 1') et formant un premier agencement d'étanchéité empêchant l'intrusion d'humidité et/ou de poussière dans le logement (1 ; 1') ; et
dans lequel le connecteur d'alimentation (8 ; 8') est relié à un deuxième agencement d'étanchéité ;
le deuxième agencement d'étanchéité étant formé dans une seconde partie (21) de l'élément de support (9) qui fait saillie depuis l'ouverture traversante (5), ladite seconde partie (21) comprenant un évidement s'étendant axialement (27) ayant une paroi d'enveloppe interne (28) qui entoure de manière étanche une paroi d'enveloppe externe du connecteur d'alimentation (8), dans lequel l'élément de support (9) comprend une première partie (20) étant agencée à l'intérieur du logement (1) et une seconde partie (21) étant agencée à l'extérieur du logement (1), la première partie (20) ayant un premier diamètre externe et la seconde partie (21) ayant un second diamètre externe, le premier diamètre externe étant plus grand que le second diamètre externe, et dans lequel la seconde partie (21) forme le deuxième agencement d'étanchéité, dans lequel une surface d'enveloppe externe (24) de ladite première partie (20) comprend un évidement circonférentiel (25) qui reçoit un élément d'étanchéité (11) qui agit entre une surface d'enveloppe interne (26) du logement (19) et la première partie (20) de l'élément de support (9), formant ainsi un troisième agencement d'étanchéité ; ou
dans lequel le deuxième agencement d'étanchéité comprenant un manchon élastique (36') ayant un canal traversant (44') agencé pour assurer la liaison entre une partie en forme de tube s'étendant axialement (35') du logement (1') qui entoure l'ouverture traversante (5') située au niveau de la première extrémité (2') du logement (1') et une surface d'enveloppe externe (29') du connecteur d'alimentation (8').

2. Dispositif de sécurité selon la revendication 1, dans lequel une paroi circonférentielle interne de l'évidement (27) comprend au moins un élément de guidage s'étendant axialement et radialement (34), l'élément de guidage étant conçu pour venir en prise avec un élément de guidage complémentaire du connecteur d'alimentation (8).

3. Dispositif de sécurité selon la revendication 1, dans lequel le générateur de gaz (10) est relié à l'élément support (9) par un couvercle surmoulé (22) formant une encapsulation au moins partielle du générateur de gaz (10) et de l'élément support (9).

4. Dispositif de sécurité selon la revendication 3, dans lequel le couvercle (22) comprend un matériau qui est plus élastique qu'un matériau de l'élément de support (9).

5. Dispositif de sécurité selon la revendication 1, dans lequel une paroi circonférentielle interne du manchon élastique (36') comprend un ou deux éléments de guidage s'étendant axialement et radialement (45') conçus pour venir en prise avec des éléments de guidage complémentaires du connecteur d'alimentation (8').

6. Dispositif de sécurité selon l'une quelconque des revendications 1 ou 5, dans lequel le manchon élastique (36') a une extrémité chevauchant au moins partiellement une partie de paroi d'enveloppe externe du logement (1).

7. Dispositif de sécurité selon l'une quelconque des revendications 1, 5 ou 6, dans lequel le manchon élastique (36') comprend une partie taille (40') s'étendant radialement et vers l'intérieur.

8. Dispositif de sécurité selon l'une quelconque des revendications 1 à 7, dans lequel le dispositif de sécurité est un lève-capot dans un véhicule.

9. Dispositif de sécurité selon l'une quelconque des revendications 1 à 7, dans lequel le dispositif de sécurité est un prétensionneur de ceinture de sécurité dans un véhicule.

10. Dispositif de sécurité selon l'une quelconque des revendications 1 à 7, dans lequel le dispositif de sécurité est un renfort de structure de siège.
